# FASCICULE DE BREVET EUROPEEN

(11) **EP 1 358 042 B1**
(45) Date de publication et mention de la délivrance du brevet: **06.10.2004**
(21) Numéro de dépôt: 02704798.4
(22) Date de dépôt: 05.02.2002
(51) Int. Cl.: B23Q 11/08

(54) **DISPOSITIF DE SEPARATION ENTRE LE POSTE D'USINAGE ET LE POSTE D'ENTRAINEMENT D'UNE MACHINE-OUTIL**
VORRICHTUNG ZUR TRENNUNG DES BEARBEITUNGSRAUMS VON DEM ORT DES ANTRIEBS EINER WERKZEUGMASCHINE
SEPARATION DEVICE BETWEEN THE MACHINING STATION AND A MACHINE-TOOL DRIVING STATION

(30) Priorité: 05.02.2001 FR 0101478
(43) Date de publication de la demande: 05.11.2003
(73) Titulaire: Comau Systèmès France, 78191 Trappes cedex (FR)
(72) Inventeur: AZEMA, André, F-81710 Saix (FR)
(74) Mandataire: Richebourg, Michel François
(86) Numéro de dépôt international: PCT/FR2002/000434
(87) Numéro de publication internationale: WO 2002/062522

(56) Documents cités:
- EP-A- 0 985 489
- WO-A-99/33608
- PATENT ABSTRACTS OF JAPAN vol. 017, no. 139 (M-1385), 22 mars 1993 (1993-03-22) -& JP 04 315546 A (MORI SEIKI CO LTD), 6 novembre 1992 (1992-11-06)
- DATABASE WPI Section PQ, Week 197825 Derwent Publications Ltd., London, GB; Class P56, AN 1978-E9174A XP002178141 -& SU 569 432 A (LENGD AUTOM LATHES), 7 septembre 1977 (1977-09-07)
- PATENT ABSTRACTS OF JAPAN vol. 010, no. 286 (M-521), 27 septembre 1986 (1986-09-27) -& JP 61 103753 A (MAKINO MILLING MACH CO LTD), 22 mai 1986 (1986-05-22)
- PATENT ABSTRACTS OF JAPAN vol. 2000, no. 10, 17 novembre 2000 (2000-11-17) -& JP 2000 202733 A (NIIGATA ENG CO LTD), 25 juillet 2000 (2000-07-25)

## Description

### DOMAINE D'APPLICATION DE L'INVENTION

La présente invention a trait au domaine des machines-outils d'usinage à grande vitesse du type de celles mettant en oeuvre deux coulants porte-outil et notamment aux adaptations permettant de séparer le poste d'usinage de ce type de machine-outil de son poste d'entraînement.

### DESCRIPTION DE L'ART ANTÉRIEUR

La conception des machines-outils d'usinage à très grande vitesse du type de celles mettant en mouvement deux coulants porte-outil dites bi-broches a nécessité l'élaboration de nouveaux moyens de séparation entre le poste d'usinage proprement dit et le poste d'entraînement. En effet, les différents capotages existants étaient particulièrement adaptés au suivi d'un seul organe mobile et non de plusieurs.

De plus, la technique des entraînements linéaires se généralisant, la séparation entre le poste d'usinage et le poste d'entraînement doit être particulièrement efficace au risque de voir les copeaux produits par l'usinage attirés par les champs magnétiques et venant polluer les entraînements et guidages de la machine-outil.

Aussi, les concepteurs de machine-outils ont-ils mené des recherches pour adapter les moyens de séparation classiques à une machine-outil du type bi-broche.

Un des critères de conception des capotages réside dans la distance de rapprochement maximal entre les deux coulants. Plus les coulants seront susceptibles de se rapprocher, plus la machine-outil sera performante du fait de la mise en commun d'une zone d'usinage et de sa capacité à faire fonctionner dans un même temps sans qu'ils ne se gênent, les deux coulants et les outils qu'ils portent.

Bien entendu, une solution technologique exploitant les caractéristiques des soufflets existe mais ne peut répondre à tous les besoins et ne peut être adaptée à toutes les applications d'usinage.

En outre, les mouvements engendrés par les structures cinématiques utilisant les moteurs linéaires sont d'une rapidité telle que les soufflets ne peuvent s'ouvrir et se refermer correctement. De même, les plis créés par les soufflets deviennent à l'usage des zones de stockage des copeaux qui empêchent le bon fonctionnement de telles solutions technologiques.

Le document EP-0985489-A décrit un dispositif selon le préambule de la revendication 1.

### DESCRIPTION DE L'INVENTION

Partant de cet état de fait, la demanderesse a mené des recherches ayant pour but de concevoir sa solution technologique pour assurer la séparation entre le poste d'usinage et le poste d'entraînement d'une machine-outil d'usinage à très grande vitesse du type de celle mettant en mouvement au moins deux coulants.

Ces recherches ont abouti à un dispositif de séparation particulièrement original répondant de façon optimale aux besoins de rapprochement des deux coulants mis en oeuvre tout en proposant une étanchéité parfaite.

Le dispositif de séparation de l'invention est défini à la revendication 1.

Cette combinaison de caractéristiques est particulièrement avantageuse en ce qu'elle propose une séparation verticale entre le poste d'usinage et le poste d'entraînement d'une machine-outil susceptible d'être exploitée pour toute application d'usinage.

De même, son escamotage autorise ce dispositif de séparation à répondre au besoin d'encombrement minimum entre les deux coulants au moyen d'un panneau se déformant lorsque les deux coulants se rapprochent. La présentation en continu d'une paroi verticale de protection non seulement garantit une bonne séparation des deux postes d'usinage et d'entraînement de la machine-outil mais facilite également le guidage de cette paroi ainsi que l'étanchéité de ce guidage par rapport au bâti de la machine-outil. En effet, en dehors des solutions technologiques de type soufflet, il est particulièrement difficile de garantir une étanchéité parfaite au niveau de l'espace défini entre les deux coulants.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif de séparation conforme à l'invention.

### BRÈVE DESCRIPTION DES DESSINS

La figure 1 est une vue en perspective arrière d'un mode de réalisation du dispositif de l'invention en position fermée où les deux coulants sont proches l'un de l'autre.

La figure 2 est une vue en perspective arrière du dispositif de la figure 1 en position ouverte où les deux coulants sont éloignés l'un de l'autre.

La figure 3a est une vue en perspective avant d'une machine-outil à laquelle peut s'adapter le dispositif de l'invention.

La figure 3b est une vue de face avant de la machine-outil de la figure 3a.

La figure 4a est une vue de dessus schématique illustrant le principe de fonctionnement du dispositif de séparation de l'invention liant les deux coulants en position rapprochée,

La figure 4b est une vue de dessus schématique illustrant le principe de fonctionnement du dispositif de séparation de l'invention liant les deux coulants en position éloignée.

### DESCRIPTION DES MODES DE RÉALISATION PRÉFÉRÉS

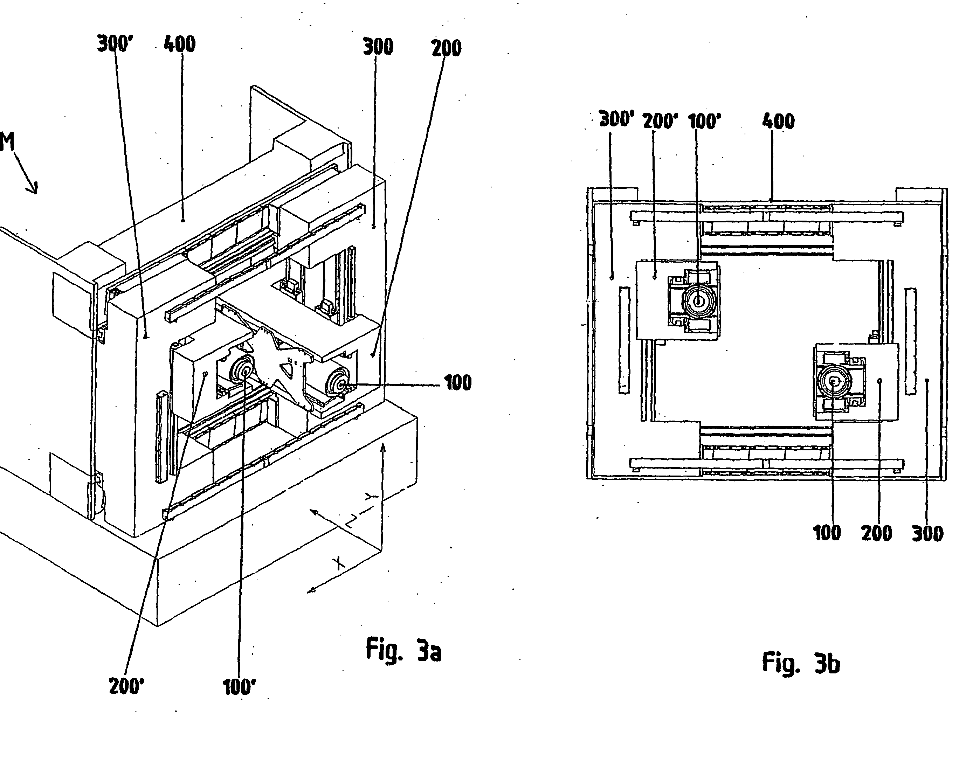

Selon un mode de réalisation non limitatif préféré et pour faciliter la description du dispositif de l'invention, la machine-outil sur laquelle sera considéré installé le dispositif de l'invention sera celle illustrée en figure 3a et 3b. Comme illustrée sur les dessins des figures 3a et 3b, la machine-outil référencée M dans son ensemble assure la mise en mouvement de deux coulants 100 et 100' au moyen d'une motorisation linéaire selon les trois axes illustrés X, Y et Z.

L'objectif du dispositif de l'invention est d'assurer de façon optimale la séparation du poste d'entraînement situé à l'arrière, du poste d'usinage situé à l'avant des coulants 100 et 100' qui assurent classiquement l'entraînement d'outils d'usinage (non illustrés).

Selon le mode de réalisation illustré, les dits coulants 100 et 100' sont chacun montés dans une poupée 200 et 200' comportant les moyens nécessaires à l'entraînement et au guidage selon l'axe Z des coulants 100 et 100'. Ces poupées 200 et 200' sont chacune liées à une demi-table 300 et 300' qui comporte les moyens d'entraînement et de guidage desdites poupées selon l'axe Y. Enfin, les deux demi-tables 300 et 300' sont liées au même portique vertical 400 qui comporte les moyens nécessaires pour l'entraînement et le guidage selon l'axe X desdites deux demi-tables 300 et 300'.

Un autre objectif du dispositif de l'invention est d'autoriser le rapprochement maximal des deux coulants 100 et 100' selon l'axe X.

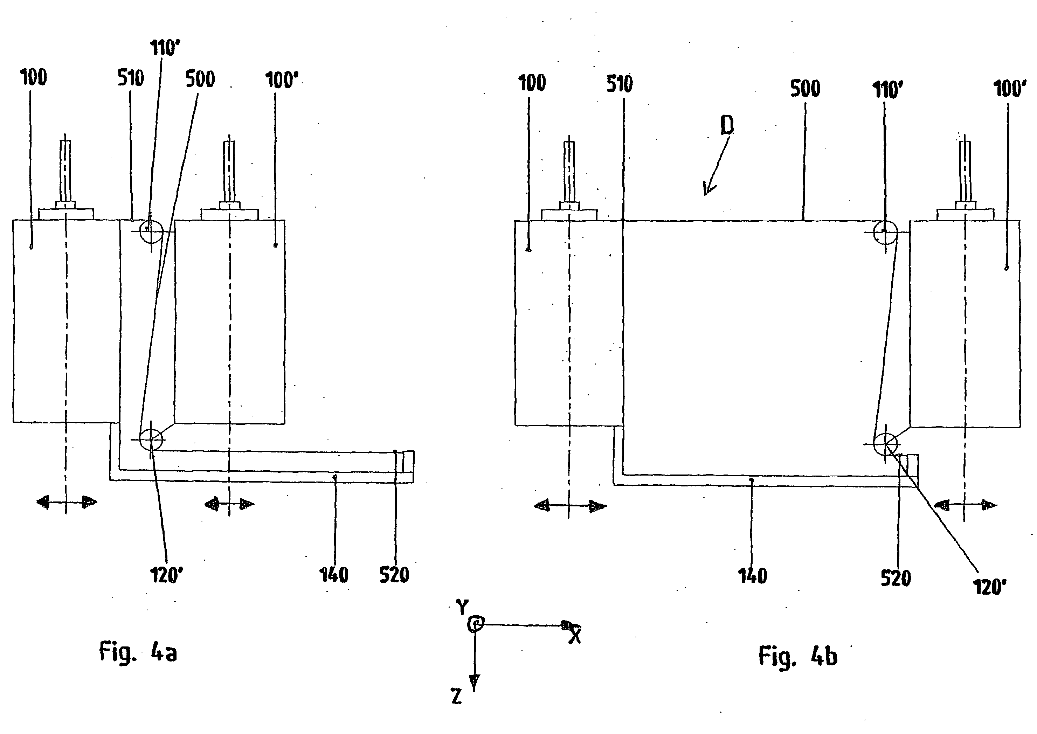

Selon le mode de réalisation illustré par les dessins des figures 4a et 4b, le dispositif de séparation de l'invention référencé D dans son ensemble, est remarquable en ce qu'il est constitué au moins entre les deux coulants 100 et 100, d'un rideau souple 500, dit rideau central, dont les deux extrémités 510 et 520 sont solidaires d'un premier coulant 100 et qui est en liaison avec le deuxième coulant 100' de façon à ce que le mouvement relatif d'un coulant 100 ou 100' par rapport à l'autre 100' ou 100 selon un premier axe de mouvement à savoir ici, l'axe X illustré, tende, selon le plan vertical défini par les axes X et Y, plus ou moins une longueur de rideau 500 entre les deux coulants 100 et 100'.

Le dispositif D de l'invention a pour avantage de présenter en continu une paroi plane verticale dans le plan P (X, Y) quelle que soit la position des deux coulants. Ainsi, comme illustrés sur le dessin de la figure 4a, les deux coulants 100 et 100' sont en position rapprochée et la longueur de rideau central 500 présentée en séparation du poste d'usinage situé à l'avant des coulants 100 et 100' et au poste d'entraînement situé à l'arrière est minimale, la longueur inutile étant escamotée vers l'intérieur de la machine-outil. Lorsque les coulants 100 et 100' s'éloignent l'un de l'autre par mouvement commun ou mouvement relatif, le deuxième coulant 100' déforme ledit rideau 500 de façon à présenter une longueur suffisante. de séparation entre les deux postes et entre les deux coulants 100 et 100'.

En effet, selon une caractéristique particulièrement avantageuse, ledit rideau central 500 est de longueur fixe et se déforme en escamotant vers l'intérieur de la machine-outil M, la longueur inutile lorsque les deux coulants 100 et 100' se rapprochent l'un de l'autre et se déploie vers l'extérieur de la machine-outil M lorsque les deux coulants 100 et 100' s'éloignent l'un de l'autre. La réalisation d'un rideau de longueur fixe évite les étirements ou déformations dus aux différents mouvements imprimés selon l'axe X aux deux coulants 100 et 100' par le poste d'entraînement. Ainsi, le rideau 500 est déployé ou escamoté instantanément, selon que les deux coulants 100 et 100' s'éloignent ou se rapprochent l'un de l'autre.

Selon un mode de réalisation préféré mais non limitatif, ledit deuxième coulant 100' comporte des moyens d'escamotage 110' et 120' constitués par des moyens de contact faisant passer le rideau 500 d'une position verticale et perpendiculaire aux axes des deux coulants 100 et 100' lesquels sont parallèles à l'axe Z, à une position verticale et parallèle aux axes desdits coulants 100 et 100'.

Selon l'invention, chaque coulant 100 et 100' comporte sur l'axe commun de mouvement et sur son côté extérieur un rideau dit rideau latéral de séparation qui suit les mouvements dudit coulant sur cet axe.

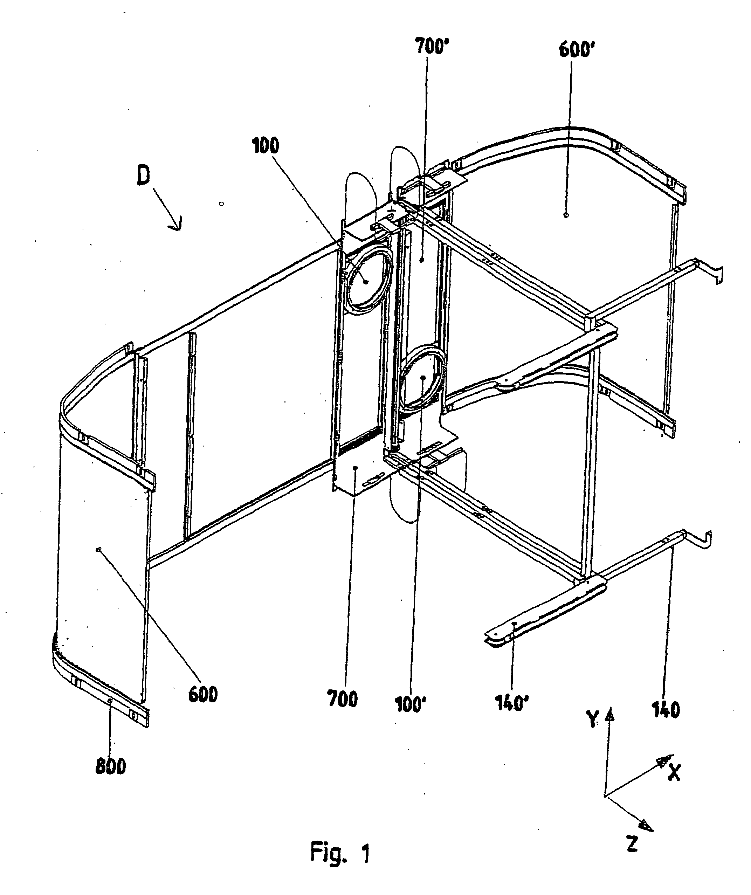

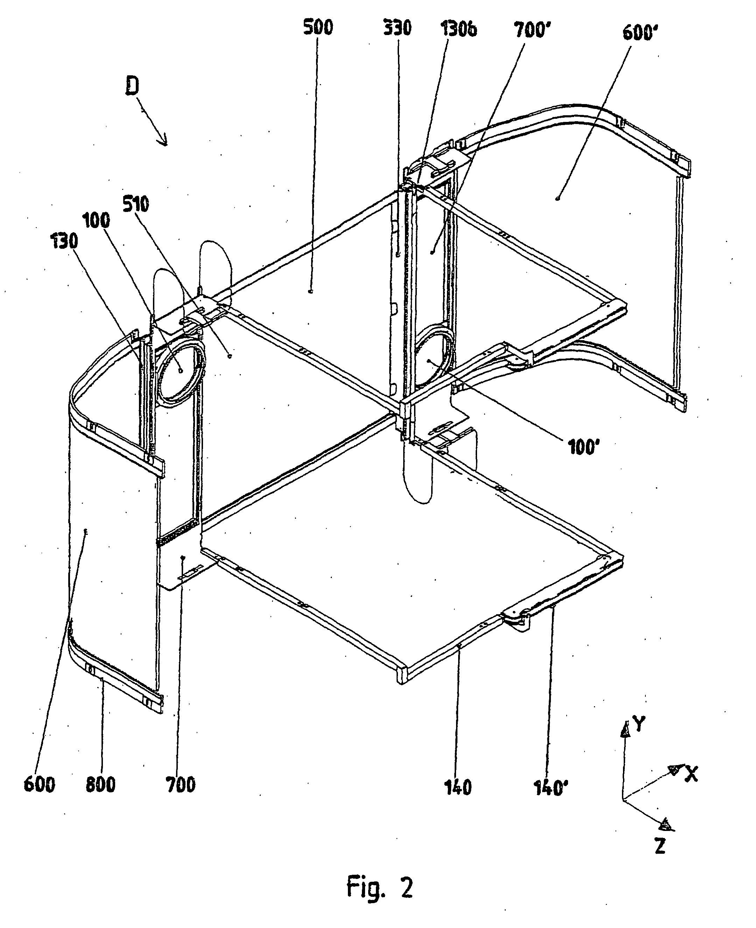

Comme illustré sur les dessins des figures 1 et 2, le dispositif D est en outre constitué par des rideaux d'appoint 600 et 600' faisant office de rideaux latéraux, chacun lié à un coulant 100 et 100' dont seules les ouvertures prévues à leur effet dans le dispositif D apparaissent, qui assurent la séparation entre le poste d'usinage et le poste d'entraînement lorsqu'un espace est créé lors de l'écartement d'un coulant 100 ou 100' de la paroi latérale de la machine-outil M.

Ainsi, le dispositif D de l'invention constitue une solution complète de séparation entre le poste d'usinage et le poste d'entraînement.

Pour compléter cette solution de séparation, chaque coulant 100 et 100' est lié à un châssis mobile 130 et 130' qui, assurant la liaison avec les extrémités desdits rideaux 500, 600 et 600', autorise le guidage d'autres rideaux 700 et 700' assurant la séparation desdits postes sur un mouvement perpendiculaire au premier.

Selon le mode de réalisation préféré mais non limitatif illustré, le dispositif D est en outre constitué d'un châssis fixe 800 qui assure le guidage desdits rideaux central et d'appoint 500, 600, 600' entraînés par les mouvements des coulants 100 et 100' auxquels ils sont associés, par rapport au bâti de la machine-outil M.

Selon le mode de réalisation illustré sur les dessins des figures 4a et 4b, les moyens d'escamotage 110' et 120' liés au deuxième coulant 100' sont constitués de rouleaux, dont un premier assure le passage du rideau 500 d'un plan vertical perpendiculaire aux axes des coulants 100 et 100' à un plan vertical quasi parallèle auxdits axes, et un deuxième qui fait passer ledit rideau 500 dudit plan quasi parallèle à un autre plan perpendiculaire mais à l'intérieur de la machine outil M.

Ainsi, lorsque les deux coulants se rapprochent la longueur de rideau 500 séparant les deux coulants 100 et 100' diminue à l'avant et augmente à l'intérieur de la machine-outil M. Inversement, lorsque les deux coulants 100 et 100' s'éloignent l'un de l'autre la longueur de rideau 500 séparant les deux coulants 100 et 100', augmente à l'extérieur et diminue d'autant puisque le rideau présente une longueur fixe, à l'intérieur de la machine-outil M.

Selon le mode de réalisation illustré sur les figures 4a et 4b, une première extrémité 510 du rideau central 500 est liée au châssis mobile 130 du premier coulant 100 et la deuxième extrémité à une patte de fixation 140 liée à l'intérieur de la machine-outil M à l'arrière dudit premier coulant 100. La patte de fixation 140 a ici pour longueur selon l'axe X, la longueur maximale du rideau en partie avant. Ainsi, lorsque les deux coulants se rejoignent, le rideau entraîné par ladite patte s'enroule autour des rouleaux de façon à diminuer sa longueur de séparation entre les deux coulants de la longueur de la course de la patte de fixation 140.

Le mode de réalisation illustré sur les dessins des figures 1 et 2, diffère en ce que les moyens d'escamotage du rideau 500 sont réalisés par un moyen de contact 530 pour le premier changement de plan à savoir du plan vertical perpendiculaire aux axes des coulants 100 et 100' à un plan vertical quasi parallèles auxdits axes. De même, chaque coulant 100 et 100' comporte une patte de fixation 140 et 140'. Selon le mode de réalisation illustré, lesdites pattes de fixation sont chacune de longueur selon l'axe X égale à la moitié de la longueur maximale de rideau 500 déployée lorsque les deux coulants 100 et 100' sont éloignés au maximum l'un de l'autre.

Bien entendu, il n'est pas obligatoire que ce soit l'extrémité 520 du rideau 500 elle-même qui soit fixée à la patte 140, mais un câble ou tout autre moyen de transmission de mouvement de façon à ne pas mettre en oeuvre un rideau de longueur trop encombrante.

Selon une caractéristique particulièrement avantageuse, chaque zone de changement de plan comporte un moyen d'étanchéité du type joint racleur pour éviter l'introduction des copeaux dans la machine-outil.

On comprend que le dispositif de séparation D, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, tel que défini dans les revendications ci-jointes.

## Revendications

1. Dispositif (D) de séparation entre le poste d'usinage et le poste d'entraînement d'une machine-outil (M) du type de celle mettant en mouvement au moins deux coulants porte-outil (100 et 100'), constitué,au moins entre les deux coulants (100 et 100'), d'un rideau souple (500) dit rideau central, **CARACTÉRISÉ PAR LE FAIT QUE** les deux extrémités (510 et 520) dudit rideau (500) sont solidaires d'un premier coulant (100) et ledit rideau (500) est en liaison avec le deuxième coulant (100') de façon à ce que le mouvement relatif d'un coulant (100 et/ou 100') par rapport à l'autre (100' et/ou 100) selon un premier axe de mouvement (X), tende plus ou moins une longueur de rideau (500) entre les deux coulants (100 et 100').

2. Dispositif (D) selon la revendication 1, **CARACTÉRISÉ PAR LE FAIT QUE** ledit rideau (500) est de longueur fixe et se déforme en escamotant vers l'intérieur de la machine-outil (M) la longueur inutile lorsque les deux coulants (100 et 100') se rapprochent l'un de l'autre et se déploie vers l'extérieur de la machine-outil (M) lorsque les deux coulants (100 et 100') s'éloignent l'un de l'autre.

3. Dispositif (D) selon la revendication 1, **CARACTÉRISÉ PAR LE FAIT QUE** ledit deuxième coulant (100') comporte des moyens d'escamotage (110' et 120') constitués par des moyens de contact faisant passer le rideau (500) d'une position perpendiculaire aux axes des deux coulants (100 et 100') à une position parallèle aux axes desdits coulants (100 et 100').

4. Dispositif (D) selon la revendication 1, **CARACTÉRISÉ PAR LE FAIT QUE** chaque coulant (100 et 100') comporte sur l'axe commun de mouvement et sur son côté extérieur un rideau dit rideau latéral de séparation qui suit les mouvements dudit coulant sur cet axe.

5. Dispositif (D) selon la revendication 1, **CARACTÉRISÉ PAR LE FAIT QU'**il comporte des rideaux d'appoint (600, 600') chacun lié à un coulant (100 et 100') et assurant la séparation entre le poste d'usinage et le poste d'entraînement lorsqu'un espace est créé lors de l'écartement d'un coulant (100 et/ou 100') de la paroi latérale de la machine-outil (M).

6. Dispositif (D) selon la revendication 5, **CARACTÉRISÉ PAR LE FAIT QUE** chaque coulant (100 et 100') est lié à un châssis mobile (130 et 130') qui, assurant la liaison avec les extrémités desdits rideaux (500, 600, 600'), autorise le guidage d'autres rideaux (700 et 700') assurant la séparation sur un mouvement perpendiculaire au premier.

7. Dispositif (D) selon la revendication 5, **CARACTÉRISÉ PAR LE FAIT QU'**il est constitué d'un châssis fixe (800) qui assure le guidage desdits rideaux (500, 600, 600') entraînés par les mouvements des coulants (100 et 100') auxquels ils sont associés, par rapport au bâti de la machine-outil (M).

8. Dispositif (D) selon la revendication 3, **CARACTÉRISÉ PAR LE FAIT QUE** les moyens d'escamotage (110' et 120') liés au deuxième coulant (100') sont constitués de rouleaux.

9. Dispositif (D) selon la revendication 7, **CARACTÉRISÉ PAR LE FAIT QU'**une première extrémité (510) du rideau central (500) est liée au châssis mobile (130) du premier coulant (100) et la deuxième extrémité (520) à une patte de fixation (140) liée à l'intérieur de la machine-outil (M) à l'arrière dudit premier coulant (100).

## Patentansprüche

1. Trennvorrichtung (D) zwischen der Bearbeitungsstation und der Antriebsstation einer Werkzeugmaschine (M) von dem Typ, der mindestens zwei Werkzeughalter-Schieber (100 und 100') in Bewegung setzt, zumindest zwischen den beiden Schiebern (100 und 100') gebildet aus einem biegsamen Vorhang (500), genannt mittlerer Vorhang, **dadurch gekennzeichnet, dass** die beiden Enden (510 und 520) des Vorhangs (500) mit einem ersten Schieber (100) fest verbunden sind und der Vorhang (500) mit dem zweiten Schieber (100') derart in Verbindung ist, dass die relative Bewegung eines Schiebers (100' und/oder 100) in Bezug auf den anderen (100' und/oder 100) entlang einer ersten Bewegungsachse (X) eine Länge des Vorhangs (500) zwischen den beiden Schiebern (100 und 100') mehr oder weniger spannt.

2. Vorrichtung (D) nach Anspruch 1, **dadurch gekennzeichnet, dass** der Vorhang (500) von fixer Länge ist und sich verformt, wobei die unnötige Länge zum Inneren der Werkzeugmaschine (M) hin eingezogen wird, wenn sich die beiden Schieber (100 und 100') aneinander annähern, und zur Außenseite der Werkzeugmaschine (M) hin entfaltet wird, wenn sich die beiden Schieber (100 und 100') voneinander entfernen.

3. Vorrichtung (D) nach Anspruch 1, **dadurch gekennzeichnet, dass** der zweite Schieber (100') Einzugmittel (110' und 120') umfasst, die durch Kontaktmittel gebildet sind, die den Vorhang (500) von einer Position senkrecht zu den Achsen der beiden Schieber (100 und 100') in eine Position parallel zu den Achsen der Schieber (100 und 100') bringen.

4. Vorrichtung (D) nach Anspruch 1, **dadurch gekennzeichnet, dass** jeder Schieber (100 und 100') an der gemeinsamen Bewegungsachse und an seiner Außenseite einen Vorhang, genannt seitlicher Trennvorhang, umfasst, der der Bewegung des Schiebers auf dieser Achse folgt.

5. Vorrichtung (D) nach Anspruch 1, **dadurch gekennzeichnet, dass** sie Zusatzvorhänge (600, 600') umfasst, die jeweils mit einem Schieber (100 und 100') verbunden sind und die Trennung zwischen der Bearbeitungsstation und der Antriebsstation sichern, wenn bei der Entfernung eines Schiebers (100 und/oder 100') von der Seitenwand der Werkzeugmaschine (M) ein Raum geschaffen wird.

6. Vorrichtung (D) nach Anspruch 5, **dadurch gekennzeichnet, dass** jeder Schieber (100 und 100') mit einem beweglichen Rahmen (130 und 130') verbunden ist, der die Verbindung mit den Enden der Vorhänge (500, 600, 600') sichert und die Führung anderer Vorhänge (700 und 700') erlaubt, die die Trennung bei einer Bewegung sichern, die senkrecht zur ersten ist.

7. Vorrichtung (D) nach Anspruch 5, **dadurch gekennzeichnet, dass** sie aus einem fixen Rahmen (800) gebildet ist, der die Führung der Vorhänge (500, 600, 600') sichert, die durch die Bewegungen der Schieber (100 und 100'), denen sie zugeordnet sind, in Bezug auf das Gestell der Werkzeugmaschine (M) angetrieben werden.

8. Vorrichtung (D) nach Anspruch 3, **dadurch gekennzeichnet, dass** die Einzugmittel (110' und 120'), die mit dem zweiten Schieber (100') verbunden sind, aus Rollen gebildet sind.

9. Vorrichtung (D) nach Anspruch 7, **dadurch gekennzeichnet, dass** ein erstes Ende (510) des mittleren Vorhangs (500) mit dem beweglichen Rahmen (130) des ersten Schiebers (100) und das zweite Ende (520) mit einer Befestigungsklaue (140) verbunden ist, die im Inneren der Werkzeugmaschine (M) mit dem hinteren Teil des ersten Schiebers (100) verbunden ist.

## Claims

1. Separation device (D) between the machining station and driving station of a machine tool (M) of the type that moves at least two tool holder rams (100 and 100'), consisting, at least between the two rams (100 and 100'), of a flexible curtain (500) called a central curtain, **CHARACTERIZED BY** THE FACT the two ends (510 and 520) of said curtain (500) are integral with a first ram (100) and said curtain is connected to the second ram (100'), so that the movement of a ram (100 and/or 100') relative to the other (100' and/or 100) along a first axis of movement (X) extends more or less over a length of the curtain (500) between the two rams (100 and 100').

2. Device (D) according to claim 1, **CHARACTERIZED BY** THE FACT that said curtain (500) is of fixed length and deforms by retracting its unused length to the interior of machine tool (M) when the two rams (100 and 100') approach each other and deploys to the exterior of machine tool (M), when the two rams (100 and 100') separate from each other.

3. Device (D) according to claim 1, **CHARACTERIZED BY** THE FACT that said second ram (100') contains means of retraction (110' and 120'), consisting of contact devices that cause the curtain (500) to pass from a position perpendicular to the axes of the two rams (100 and 100') to a position parallel to the axes of said rams (100 and 100').

4. Device (D) according to claim 1, **CHARACTERIZED BY** THE FACT that each ram (100 and 100') contains, on its common movement axis and on its exterior, a so-called lateral separation curtain that follows the movements of said ram on this axis.

5. Device (D) according to claim 1, **CHARACTERIZED BY** THE FACT that it comprises of makeup curtain (600, 600'), each connected to a ram (100 and 100') and ensuring separation between the machining station and the driving station, when a space is created during separation of a ram (100 and/or 100') from the lateral wall of the machining tool (M).

6. Device (D) according to claim 5, **CHARACTERIZED BY** THE FACT that each ram (100 and 100') is connected to a mobile carriage (130 and 130'), which, ensuring connection with the ends of said curtains (500, 600, 600'), permits guiding of the other curtains (700 and 700') that ensures separation over a movement perpendicular to the former.

7. Device (D) according to claim 5, **CHARACTERIZED BY** THE FACT that it consists of a fixed carriage (800) that ensures guiding of said curtains (500, 600, 600') driven by the movements of rams (100 and 100'), to which they are associated, relative to the frame of the machine tool (M).

8. Device (D) according to claim 3, **CHARACTERIZED BY** THE FACT that the means of retraction (110' and 120') connected to the second ram (100') consist of rollers.

9. Device (D) according to claim 7, **CHARACTERIZED BY** THE FACT that a first end (510) of the central curtain (500) is connected to the mobile carriage (130) of the first ram (100) and the second end (520) to an attachment tab (140) connected to the interior of the machine tool (M) to the rear of said first ram (100).
